(19) Europäisches Patentamt
European Patent Office
Office européen des brevets

(11) EP 2 450 689 B1

(12) **EUROPEAN PATENT SPECIFICATION**

(45) Date of publication and mention of the grant of the patent:
**01.04.2015 Bulletin 2015/14**

(21) Application number: **09846725.1**

(22) Date of filing: **30.12.2009**

(51) Int Cl.:
***G01N 1/24*** $^{(2006.01)}$ *G01N 1/02* $^{(2006.01)}$

(86) International application number:
**PCT/CN2009/076259**

(87) International publication number:
**WO 2011/000197 (06.01.2011 Gazette 2011/01)**

(54) **SAMPLE COLLECTING METHOD AND SAMPLE COLLECTING APPARATUS**

PROBENENTNAHMEVERFAHREN UND PROBENENTNAHMEVORRICHTUNG

PROCÉDÉ DE PRÉLÈVEMENT D'ÉCHANTILLON ET APPAREIL DE PRÉLÈVEMENT D'ÉCHANTILLON

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.06.2009 CN 200910088625**

(43) Date of publication of application:
**09.05.2012 Bulletin 2012/19**

(73) Proprietor: **Nuctech Company Limited**
**Tongfang Building**
**Shuangqinglu**
**Haidian District**
**Beijing 100084 (CN)**

(72) Inventors:
- **ZHANG, Yangtian**
  **Beijing 100084 (CN)**
- **LIN, Jin**
  **Beijing 100084 (CN)**
- **WANG, Yaoxin**
  **Beijing 100084 (CN)**
- **LI, Guanxing**
  **Beijing 100084 (CN)**
- **JIAO, Peng**
  **Beijing 100084 (CN)**

(74) Representative: **Isarpatent**
**Patent- und Rechtsanwälte**
**Postfach 44 01 51**
**80750 München (DE)**

(56) References cited:
**CN-A- 1 777 799**
**US-A- 5 915 268**
**US-A1- 2004 155 181**
**US-A1- 2007 032 088**
**US-A1- 2007 034 024**
**US-A1- 2008 250 877**
**US-A1- 2008 314 166**
**US-B1- 6 378 385**
**US-B2- 6 867 413**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 450 689 B1

## Description

### FIELD OF INVENTION

The present invention relates to detection of dangerous articles, such as narcotic drugs, explosives, chemical warfare agents, industry poisonous agents or the like, more particularly, to a sampling method and a sampling device for the above articles by sucking the same in a form of gaseous or particulate state into a detecting device.

### BACKGROUND OF INVENTION

In the security inspection field, it is very important to detect dangerous articles, such as narcotic drugs, explosives, chemical warfare agents, industry poisonous agents. Therefore, various detectors for detecting the above articles have been developed. However, for each kind of detector, samples have to be transferred from a detecting surface of the article into the detector during detecting.

At present, two methods of a suck-type sampling method and a wipe-type sampling method are commonly used. In the wipe-type sampling method, sampling is performed by using a wiping paper to wipe the detecting surface, and then the wiping paper is moved directly into a detector. However, the present application is directed to the suck-type sampling method rather than the wipe-type sampling method. In the suck-type sampling method, sampling is performed directly at the detecting surface by way of sucking, or is performed based on collected samples in advance by way of sucking.

There are mainly two suck-type sampling methods used in existing products or disclosed by published patents. The first method is a direct suction method in which, as shown in Fig.1, a detecting device sucks air directly from surrounding environment. Because some dangerous articles have viscosity, they tend to adhere to surfaces of an object to be detected. Thus, the direct suction method can only capture volatilized gases or fine particles in a free state. In order to collect the dangerous articles adhered to the surfaces of the object to be detected, a second method is widely used, in which airflow is first blown to raise the particles of the sample; then, the raised particles are sucked into the detecting device, as shown in Fig. 2. Advantageously, the blown airflow is formed of spiral or heated air.

Fig. 2 shows an example of the second method which improves the detecting efficiency; usually, the airflow is blown from peripheral of a sampling device and is sucked at a center part thereof. The above method can be implemented more easily with a sampling device, wherein the inlet of a detecting device is commonly provided at the center part of the sampling device so that the detecting device can be connected directly with the sampling device. However, because an air exit has a large size while the airflow is sucked at the center part, the blowing force of such sampling device is small, which results in a low sampling efficiency.

U.S. Patent Publication No. 6,378,385 discloses a device that samples chemicals adsorbed to a surface by applying a pulse of fluid to desorb the particles adhered to the surface. After the pulse of fluid, the region above the surface is enriched with particles dislodged from the surface. Suction is applied in the region above the surface to collect these dislodged particles, which are then transferred to a chemical detector for detection, identification, and quantification. A pulsed air sampler collects particles adhered to a surface and delivers the particles to a chemical sensor. An outlet ejects a fluid, preferably gas, pulse to dislodge particles from the surface and thereby enrich the density of particles above the surface. An inlet collects the dislodged particles for delivery to the chemical sensor.

U.S. Patent Publication No. 2007/034024 discloses a sampling system that contains filter components for collecting and concentrating vapor and particles in high-volume flows. The sample is then vaporized and delivered to a detector at a low-volume flow. The invention also has a sampling probe that contains an air-jet to help dislodge particles from surfaces and a heating lamp to help vaporize compounds on surfaces or objects. The sampling system is especially useful for screening for explosives and other illicit chemicals and toxins on people, baggage, cargo, and other objects.

U.S. Patent Publication No. 2008/250877 discloses a sample collection method that could release and collect residues of explosives and other chemicals from a surface; the described method is implemented into a compact detection system that can be used as a "wand" for screening chemicals residues on a subject. The wand configuration includes multi-function for sampling and detecting multiple threads. The invention further describes a method of inspecting a subject using an interrogating apparatus in a sweeping motion; the near range closed loop particle sampling arrangement allows effective collection of particle and vapor residues from a targeted surface. The invention also describes a sampling and detecting apparatus for on-the-fly threat detection using compact ion mobility based detectors.

U.S. Patent Publication No. 2008/314166 discloses an aerodynamic sampler for sampling particles from a surface or a flowing gas stream is provided. The sampler can include an arcuate-shaped shroud having a first opening and a second opening, the first opening being directed in a first direction and the second opening oppositely disposed and spaced apart from the first opening. A gas nozzle having at least one gas outlet directed generally in the first direction can be included and may or may not be located at least partially within the shroud. The gas nozzle is operable to supply a gas jet to a surface that is proximate the first opening of the shroud. In addition, a suction device operable to pull or suck the gas proximate the first opening through the second opening and afford for the gas to enter a detector is provided. The arcuate-shaped shroud can be a bell-shaped shroud with the first opening located at a bottom of the bell-shape.

U.S. Patent Publication No. 2007/032088 discloses a detection technique for detecting foreign material on the surface of a plasma processing apparatus, capable of accurately sucking/extracting and measuring foreign material contained in the measurement object surface is provided. The detection device comprises a gauge head or probe having a gas blow out opening for intermittently blowing a gas of a predetermined pressure to a measurement object surface and a gas suction opening for sucking foreign material discharged by the gas blown out from the gas blow out opening a particle counter having a suction pump for continuously sucking in a predetermined amount of gas from the gas suction opening for counting the number of foreign material particles contained in the gas sucked by the suction pump and a pressure adjustment unit for intermittently supplying gas of a predetermined pressure to the gas blowing out opening.

U.S. Patent No. 5,915,268 discloses a portal apparatus for screening objects or persons for the presence of trace amounts of chemical substances such as illicit drugs or explosives. The apparatus has a test space, in which a person may stand, defined by two generally upright sides spanned by a horizontal transom. One or more fans in the transom generate a downward air flow (uni-directional) within the test space. The air flows downwardly from a high pressure upper zone, past the object or person to be screened. Air moving past the object dislodges from the surface thereof both volatile and nonvolatile particles of the target substance. The particles are entrained into the air flow which continues flowing downward to a lower zone of reduced pressure, where the particle-bearing air stream is directed out of the test space and toward pre-concentrator and detection components. The sides of the portal are specially configured to partially contain and maintain the air flow.

U.S. Patent No. 2004/155181 discloses that the presence of trace molecules in air may be determined using an ion mobility spectrometer. Such devices may be used in the fields of explosives detection, identification of narcotics, and in applications characterized by the presence of very low airborne concentrations of organic molecules of special interest. The sensitivity of such instruments may depend upon on the method of gas sampling utilized. A virtual wall gas sampling system can greatly improve the sampling efficiency, particularly when the sampling needs to be performed at a distance from the air intake and large volumes need to be sampled. The virtual wall gas sampling system consists of an intake gas flow and a separate group of one or more sheet-like gas flows, which may be either mutually deflected to move with a circular motion or may be formed into a cylindrical bounding surface.

## SUMMARY OF INVENTION

In view of the above, the present invention is made to solve or alleviate at least one of the disadvantages or technical problems in the prior art.

According to an aspect of the present invention, there is provided a sampling method, comprising the steps of:

> providing a sampling device on a sampling surface, the sampling device comprising a housing which is shaped to form a sampling space together with the sampling surface, and the sampling device including a blowing port arranged at the center portion of the housing and a sucking port arranged at periphery of the housing; characterized in that the method comprises using a spiral airflow guiding device or a fan provided within the blowing port to blow airflow towards the sampling surface through the blowing port such that the airflow blown is swirled above the sampling surface; and sucking the airflow blown towards the sampling surface through the sucking port so as to collect samples.

According to another aspect of the present invention, there is provided a sampling device according to claim 5.

Alternatively, the step of blowing airflow comprises increasing an instantaneous speed of the airflow from the blowing port by means of a volume buffer.

Alternatively, the step of blowing airflow comprises heating the airflow. Alternatively, the step of blowing airflow comprises adjusting the blowing direction of the airflow from the blowing port with respect to the sampling surface.

Alternatively, the adjusting of the blowing direction is performed by providing a spiral airflow guiding device or a fan within the blowing port.

Alternatively, the blowing port is tapered to increase the speed of the airflow from the blowing port.

Alternatively, the sucking port comprises a plurality of sucking ports, and the blowing port is arranged at a center portion of a polygon formed by the plurality of sucking ports.

Alternatively, the sucking port forms a ring surrounding the periphery of the sampling device, and the blowing port is arranged at a center portion of the ring.

Alternatively, the blowing port extends in a direction which is perpendicular to the sampling surface.

According to further another aspect of the present invention there is provided a sampling device which comprises: a housing which can be provided on a sampling surface and is shaped to form a sampling space together with the sampling surface; a blowing port which is provided at a center portion of the housing to blow airflow towards the sampling surface; and a sucking port which is provided at periphery of the housing to suck the airflow blown towards the sampling surface, characterized in that the blowing port comprises a spiral airflow guiding device or a fan, the spiral airflow guiding device or the fan is adapted to swirl the airflow blown out above the sampling surface.

Alternatively, the sampling device further comprises a volume buffer which is provided at the upstream of the blowing port in a flowing direction of the airflow to increase an instantaneous speed of the airflow from the blowing port.

Alternatively, the sampling device further comprises a heater for heating the airflow.

Alternatively, the sampling device further comprises a spiral airflow guiding device which is provided within the blowing port to adjust the blowing direction of the airflow from the blowing port with respect to the sampling surface.

Alternatively, the sampling device further comprises a fan which is provided within the blowing port to adjust the blowing direction of the airflow from the blowing port with respect to the sampling surface.

Alternatively, the blowing port is tapered to increase the speed of the airflow from the blowing port.

Alternatively, the sucking port comprises a plurality of sucking ports, and the blowing port is arranged at a center portion of a polygon formed by the plurality of sucking ports.

Alternatively, the sucking port forms a ring surrounding the periphery of the sampling device, and the blowing port is arranged at a center portion of the ring.

Alternatively, the blowing port comprises a plurality of blowing ports.

According to the present invention, the blowing device is provided at the center, while the sucking device is provided at the periphery, which may produce the following technical effect.

1. Larger blowing force

For the same flow rate, the smaller is the section area of the blowing port, the higher is the speed of the airflow. Thus, the area of the blowing port in the conventional solution where the airflow is blown at the periphery is larger than that of the blowing port in a solution where the airflow is blown at the center according to the present invention; therefore, the present invention can provide a blowing airflow having a higher speed. The blown airflow is used to blow particles of dangerous articles off the detecting surface to which the particles may adhere. According to aerodynamics principle, as for the same particle, blowing force F acting on it is calculated based on the following formula:

$$F = C_d \times \frac{\rho}{2} \times S_d \times v^2$$

wherein parameters in the formula except for the speed v of the airflow are constant, thus, the blowing force F is in direct proportion to the square of v. Therefore, for the same flow rate of the airflow, the solution of the present invention will produce a larger blowing force, compared to the conventional solution.

2. Improved sampling efficiency

In the conventional solution, since the area of the blowing port is large, a larger flow rate is needed in order to improve the blowing ability, however, the center portion, which is connected directly to the detecting device, can not provide a sucking airflow having a too large flow rate. Because the flow rate of the blowing airflow is larger than that of the sucking airflow, the particles raised by the blowing airflow supplied from the periphery can not be completely sucked into the detecting device. In addition, some particles raised by the blowing airflow supplied from the periphery may be away from the center portion and therefore it is very difficult to collect them.

With the solution of the present invention in which the airflow is blown at the center portion, a blowing airflow having a higher speed is obtained with a lower flow rate of the blowing airflow, and at the same time, the raised particles move towards the periphery together with the airflow and are captured by the sucking device provided at the periphery, thus, the sampling efficiency is improved.

BRIEF DESCRIPTION OF DRAWINGS

The attached drawings of the present invention will be described below for more complete understanding of the present invention and showing of practicing the present invention, wherein

Fig. 1 is a schematic view of a direct air-suction method of the prior art;

Fig. 2 is a schematic view showing an air passage solution of the prior art in which the air is blown from the periphery and is sucked in the center portion;

Fig. 3 is a schematic view showing an air passage solution according to one embodiment of the present invention in which the air is blown from the center portion while is sucked in the periphery; and

Fig. 4 is a schematic view a spiral airflow guiding device according to one embodiment of the present invention.

**DETAILED DESCRIPTION OF EMBODIMENTS**

Exemplary embodiments of the present disclosure will be described hereinafter in detail with reference to the attached drawings. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

SAMPLING METHOD

Refer to Fig. 3, a sampling method according to the present invention comprises the steps of: blowing airflow towards a center portion of a sampling surface 5 through a blowing port 1, as shown by the arrow A; and sucking the blown airflow from periphery of the sampling surface 5 through a sucking port 2, as shown by the arrow B.

Also refer to Fig. 3, another sampling method according to the present invention comprises the steps of: providing a sampling device 100 on a sampling surface 5, the sampling device 100 being shaped to form a sampling space S together with the sampling surface 5, and the sampling device 100 including a blowing port 1 arranged at the center portion of the sampling device 100 and a sucking port 2 arranged at periphery of the sampling device 100; blowing airflow towards the sampling surface through the blowing port, as shown by the arrow A; and sucking the airflow blown towards the sampling surface through the sucking port so as to collect samples, as shown by the arrow B.

As known in the art, the blowing port 1 is communicated with a blowing air source (not shown) through an inlet 4, and the sucking port 2 is communicated with a detecting device (not shown) through an outlet 3.

In the above sampling methods, the step of blowing airflow comprises increasing an instantaneous speed of the airflow from the blowing port by means of a volume buffer (not shown) and/or the step of blowing airflow comprises heating the airflow. In an embodiment, the volume buffer may be provided at the upstream of the blowing port 1, for example, when the air pressure in the volume buffer reaches a predetermined value, the air in the volume buffer is blown at a high speed towards the sampling surface 5 via the blowing port 5, then the volume buffer begins to re-accumulate air therein. Thus, the blowing airflow is intermittent; however, a high speed is obtained. If the blowing air is heated before blowing towards the sampling surface, the volatilization of the dangerous articles at the sampling surface is expedited or the adhering of the articles to the sampling surface is weakened, which results in an improved sampling precision.

In the above sampling methods, the step of blowing airflow comprises adjusting the blowing direction of the airflow from the blowing port 1 with respect to the sampling surface 5. Advantageously, the adjusting of the blowing direction is performed by providing a spiral airflow guiding device 7 (referring to Fig. 4) within the blowing port 1, or the adjusting of the blowing direction is performed by providing a fan (not shown) within the blowing port 1. For example, the blowing airflow is swirled above the sampling surface 5 by using the spiral airflow guiding device 7 or the fan, so that the blowing ability of the airflow is enhanced.

Advantageously, the blowing port 1 is tapered to increase the speed of the airflow from the blowing port 1. For instance, the blowing port 1 is formed as a nozzle.

Next, the arrangement of the sucking port 2 will be described. The sampling device 100 may comprise a plurality of sucking ports 2, and in this case the blowing port 1 can be arranged at a center portion of a polygon formed by the plurality of sucking ports. Alternatively, the sucking port 2 may form a ring surrounding the periphery of the sampling device 100, and the blowing port 1 is arranged at a center portion of the ring.

In addition, in order to improve the disturbance ability of the blowing airflow to the samples on the sampling surface 5, the blowing port 1 may extend in a direction which is perpendicular to the sampling surface.

In order to improve the sucking efficiency, for example, to prevent or restrict receiving air outside of the sampling device, a skirt portion 6 is provided at the periphery of the sampling device 100 to seal the sampling space S.

SAMPLING DEVICE

Refer to Fig. 3, a sampling device 100 according to one embodiment of the present invention comprises: a blowing port 1 which blows airflow towards a center portion of a sampling surface 5, referring to the arrow A; and a sucking port 2 which sucks the blown airflow from periphery of the sampling surface 5, referring to the arrow B.

Also refer to Fig. 3, a sampling device 100 according to another embodiment of the present invention comprises a housing 10 which is shaped to form a sampling space S together with a sampling surface 5; a blowing port 1 which is provided at a center portion of the housing 10 to blow airflow towards the sampling surface, referring to the arrow A; and a sucking port 2 which is provided at periphery of the housing 10 to suck the airflow blown towards the sampling surface, referring to the arrow B.

As known in the art, the blowing port 1 is communicated with a blowing air source (not shown) through an inlet 4, and the sucking port 2 is communicated with a detecting device (not shown) through an outlet 3.

The above sampling devices 100 may further comprise a volume buffer (not shown) which is provided at the upstream of the blowing port 1 in a flowing direction of the airflow to increase an instantaneous speed of the airflow from the blowing port 1. For example, when the air pressure in the volume buffer reaches a predetermined value, the air in the volume buffer is blown at a high speed towards the sampling surface 5 via the blowing port 1, then the volume buffer begins to re-accumulate air therein. Thus, the blowing airflow is intermittent; however, a high speed is obtained.

The above sampling devices 100 may further comprise a heater (not shown) for heating the airflow. For instance, the heater may be provided directly within the blowing port 1. If the blowing air is heated before blowing towards the sampling surface, the volatilization of the dangerous articles at the sampling surface is expedited or the adhering of the articles to the sampling surface is weakened, which results in an improved sampling precision.

The above sampling devices 100 may further comprise a spiral airflow guiding device 7 (referring to Fig. 4) which is provided within the blowing port 1 to adjust the blowing direction of the airflow from the blowing port 1 with respect to the sampling surface 5. In an embodiment, the above sampling devices 100 may further comprise a fan or other guiding member (not shown) which is provided within the blowing port 1 to adjust the blowing direction of the airflow from the blowing port 1 with respect to the sampling surface 5. For example, the blowing airflow is swirled above the sampling surface 5 by using the spiral airflow guiding device 7 or the fan, so that the blowing ability of the airflow is enhanced.

Advantageously, the blowing port 1 is tapered to increase the speed of the airflow from the blowing port 1. For instance, the blowing port 1 is formed as a nozzle. Though not shown, the sampling device 100 may comprise a plurality of blowing ports 1.

Next, the arrangement of the sucking port 2 will be described. The sampling device 100 may comprise a plurality of sucking ports 2, and in this case the blowing port 1 can be arranged at a center portion of a polygon formed by the plurality of sucking ports. Alternatively, the sucking port 2 may form a ring surrounding the periphery of the sampling device, and the blowing port 1 is arranged at a center portion of the ring.

In the sampling devices 100, in order to improve the disturbance ability of the blowing airflow to the samples on the sampling surface 5, the blowing port 1 may extend in a direction which is perpendicular to the sampling surface.

In order to improve the sucking efficiency, for example, to prevent or restrict receiving air outside of the sampling device, a skirt portion 6 is provided at the periphery of the sampling device 100 to seal the sampling space S.

## Claims

1. A sampling method, comprising the steps of:

   providing a sampling device (100) on a sampling surface (5), the sampling device (100) comprising a housing (10) which is shaped to form a sampling space (S) together with the sampling surface (5), and the sampling device (100) including a blowing port (1) arranged at the center portion of the housing (10) and a sucking port (2) arranged at periphery of the housing (10);
   **characterized in that** the method comprises using a spiral airflow guiding device or a fan provided within the blowing port to blow airflow towards the sampling surface (5) through the blowing port (1) such that the airflow blown is swirled above the sampling surface (5); and
   sucking the airflow blown towards the sampling surface (5) through the sucking port (2) so as to collect samples.

2. The sampling method according to claim 1, wherein the step of blowing airflow comprises increasing an instantaneous speed of the airflow from the blowing port (1) by means of a volume buffer.

3. The sampling method according to claim 1, wherein the step of blowing airflow comprises heating the airflow.

4. The sampling method according to claim 1, wherein the blowing port (1) is tapered to increase the speed of the airflow from the blowing port (1).

5. A sampling device (100) comprising:

   a housing (10) which can be provided on a sampling surface and
   is shaped to form a sampling space together with the sampling surface (5);
   a blowing port (1) which is provided at a center portion of the housing (10) to blow airflow towards the sampling surface (5); and
   a sucking port (2) which is provided at periphery of the housing (10) to suck the airflow blown towards the sampling surface (5),
   **characterized in that**
   the blowing port (1) comprises a spiral airflow guiding device (7) or a fan, the spiral airflow guiding device (7) or the fan is adapted to swirl the airflow blown out above the sampling surface (5).

6. The sampling device according to claim 5, further comprising
   a volume buffer which is provided at the upstream of the blowing port (1) in a flowing direction of the airflow to increase an instantaneous speed of the airflow from the blowing port (1).

7. The sampling device according to claim 5, further comprising a heater for heating the airflow.

8. The sampling device according to claim 5, wherein the blowing port (1) is tapered to increase the speed of the airflow from the blowing port (1).

9. The sampling device according to claim 5, wherein the sucking port (2) comprises a plurality of sucking ports, and the blowing port (1) is arranged at a center portion of a polygon formed by the plurality of sucking ports.

10. The sampling device according to claim 5, wherein the sucking port (2) forms a ring surrounding the periphery of the sampling device (100), and the blowing port (1) is arranged at a center portion of the ring.

## Patentansprüche

1. Abtastverfahren, das folgende Schritte umfasst:

    - Bereitstellen einer Abtastvorrichtung (100) auf einer Abtastoberfläche (5), wobei die Abtastvorrichtung (100) ein Gehäuse (10) umfasst, das so geformt ist, dass es zusammen mit der Abtastoberfläche (5) einen Abtastraum (S) bildet, und die Abtastvorrichtung (100) eine Blasmündung (1) umfasst, die in einem mittigen Abschnitt des Gehäuses (10) angeordnet ist, und eine Saugmündung (2) umfasst, die am Umfangsrand des Gehäuses (10) angeordnet ist;

    **dadurch gekennzeichnet, dass** das Verfahren Folgendes umfasst:

    - Verwenden einer spiralförmigen Luftstromleitvorrichtung oder eines Gebläses, die bzw. das innerhalb der Blasmündung angeordnet ist, um einen Luftstrom in Richtung der Abtastoberfläche (5) durch die Blasmündung (1) zu blasen, dergestalt, dass der geblasene Luftstrom über der Abtastoberfläche (5) verwirbelt wird; und
    - Saugen des in Richtung der Abtastoberfläche (5) geblasenen Luftstroms durch die Saugmündung (2), um Proben aufzunehmen.

2. Abtastverfahren nach Anspruch 1, wobei der Schritt des Blasens des Luftstroms umfasst, eine Momentangeschwindigkeit des von der Blasmündung (1) kommenden Luftstroms unter Verwendung eines Volumenpuffers zu erhöhen.

3. Abtastverfahren nach Anspruch 1, wobei der Schritt des Blasens des Luftstroms das Erwärmen des Luftstroms umfasst.

4. Abtastverfahren nach Anspruch 1, wobei die Blasmündung (1) verjüngt ist, um die Geschwindigkeit des von der Blasmündung (1) kommenden Luftstroms zu erhöhen.

5. Abtastvorrichtung (100), die Folgendes umfasst:

    - ein Gehäuse (10), das auf einer Abtastoberfläche bereitgestellt werden kann und so geformt ist, dass es zusammen mit der Abtastoberfläche (5) einen Abtastraum (S) bildet,
    - eine Blasmündung (1), die in einem mittigen Abschnitt des Gehäuses (10) angeordnet ist, um einen Luftstrom in Richtung der Abtastoberfläche (5) zu blasen; und
    - eine Saugmündung (2), die am Umfangsrand des Gehäuses (10) angeordnet ist, um den in Richtung der Abtastoberfläche (5) geblasenen Luftstroms anzusaugen,

    **dadurch gekennzeichnet, dass**
    die Blasmündung (1) eine spiralförmige Luftstromleitvorrichtung (7) oder ein Gebläse umfasst, wobei die spiralförmige Luftstromleitvorrichtung (7) oder das Gebläse dafür ausgelegt ist, den ausgeblasenen Luftstrom über der Abtastoberfläche (5) zu verwirbeln.

6. Abtastvorrichtung nach Anspruch 5, die des Weiteren einen Volumenpuffer umfasst, welcher der Blasmündung (1) in einer Strömungsrichtung des Luftstroms vorgelagert ist, um eine Momentangeschwindigkeit des von der Blasmündung (1) kommenden Luftstroms zu erhöhen.

7. Abtastvorrichtung nach Anspruch 5, die des Weiteren eine Heizvorrichtung zum Erwärmen des Luftstroms umfasst.

8. Abtastvorrichtung nach Anspruch 5, wobei die Blasmündung (1) verjüngt ist, um die Geschwindigkeit des von der Blasmündung (1) kommenden Luftstroms zu erhöhen.

9. Abtastvorrichtung nach Anspruch 5, wobei die Saugmündung (2) mehrere Saugmündungen umfasst, und die Blasmündung (1) an einem mittigen Abschnitt eines Polygons angeordnet ist, das durch die mehreren Saugmündungen gebildet wird.

10. Abtastvorrichtung nach Anspruch 5, wobei die Saugmündung (2) einen Ring bildet, der den Umfangsrand der Abtastvorrichtung (100) umgibt, und die Blasmündung (1) an einem mittigen Abschnitt des Rings angeordnet ist.

## Revendications

1. Procédé d'échantillonnage, comportant les étapes consistant à :

    - fournir un dispositif d'échantillonnage (100) sur une surface d'échantillonnage (5), le dispositif d'échantillonnage (100) comprenant un boîtier (10) lequel est conformé pour former un espace échantillonnage (S) conjointement avec la surface d'échantillonnage (5), et le dispositif d'échantillonnage (100) comprenant un orifice de ventilation (1) disposé au niveau du la partie centrale du boîtier (10) et un orifice d'aspiration (2) disposé à la périphérie du boîtier (10) ;

**caractérisé en ce que** le procédé comprend :

- d'utiliser un dispositif de guidage de flux d'air en spirale ou un ventilateur agencé à l'intérieur de l'orifice de ventilation pour souffler un flux d'air en direction de la surface d'échantillonnage (5) à travers l'orifice de ventilation (1) de sorte que le flux d'air soufflé est brassé au-dessus de la surface d'échantillonnage (5) ; et
- d'aspirer le flux d'air soufflé en direction de la surface d'échantillonnage (5) à travers l'orifice d'aspiration (2) de manière à collecter des échantillons.

**2.** Procédé d'échantillonnage selon la revendication 1, dans lequel l'étape consistant à souffler un flux d'air comporte d'augmenter une vitesse instantanée du flux d'air depuis l'orifice de ventilation (1) par l'intermédiaire d'un tampon de volume.

**3.** Procédé d'échantillonnage selon la revendication 1, dans lequel l'étape consistant à souffler un flux d'air comporte de chauffer le flux d'air.

**4.** Procédé d'échantillonnage selon la revendication 1, dans lequel l'orifice de ventilation (1) est conique pour augmenter la vitesse du flux d'air depuis l'orifice de ventilation (1).

**5.** Dispositif d'échantillonnage (100) comprenant :

- un boîtier (10) lequel peut être disposé sur une surface d'échantillonnage, et est conformé pour former un espace échantillonnage conjointement avec la surface d'échantillonnage (5) ;
- un orifice de ventilation (1) lequel est disposé au niveau d'une partie centrale du boîtier (10) pour souffler un flux d'air en direction de la surface d'échantillonnage (5) ; et
- un orifice d'aspiration (2) lequel est disposé à la périphérie du boîtier (10) pour aspirer le flux d'air soufflé en direction du surface d'échantillonnage (5),

**caractérisé en ce que**
l'orifice de ventilation (1) comprend un dispositif de guidage de flux d'air en spirale (7) ou un ventilateur, le dispositif de guidage de flux d'air en spirale (7) ou le ventilateur est adapté pour brassé le flux d'air soufflé au-dessus de la surface d'échantillonnage (5).

**6.** Dispositif d'échantillonnage selon la revendication 5, comprenant en outre un tampon de volume lequel est prévu en amont de l'orifice de ventilation (1) dans une direction de circulation du flux d'air pour augmenter une vitesse instantanée du flux d'air depuis l'orifice de ventilation (1).

**7.** Dispositif d'échantillonnage selon la revendication 5, comprenant en outre un dispositif de chauffage pour chauffer le flux d'air.

**8.** Dispositif d'échantillonnage selon la revendication 5, dans lequel l'orifice de ventilation (1) est conique pour augmenter la vitesse du flux d'air depuis l'orifice de ventilation (1).

**9.** Dispositif d'échantillonnage selon la revendication 5, dans lequel l'orifice d'aspiration (2) comprend une pluralité d'orifices d'aspiration, et l'orifice de ventilation (1) est disposé au niveau d'une partie centrale d'un polygone formé par la pluralité d'orifices d'aspiration.

**10.** Dispositif d'échantillonnage selon la revendication 5, dans lequel l'orifice d'aspiration (2) forme un anneau entourant la périphérie du dispositif d'échantillonnage (100), et l'orifice d'aspiration (1) est disposé au niveau d'une partie centrale de l'anneau.

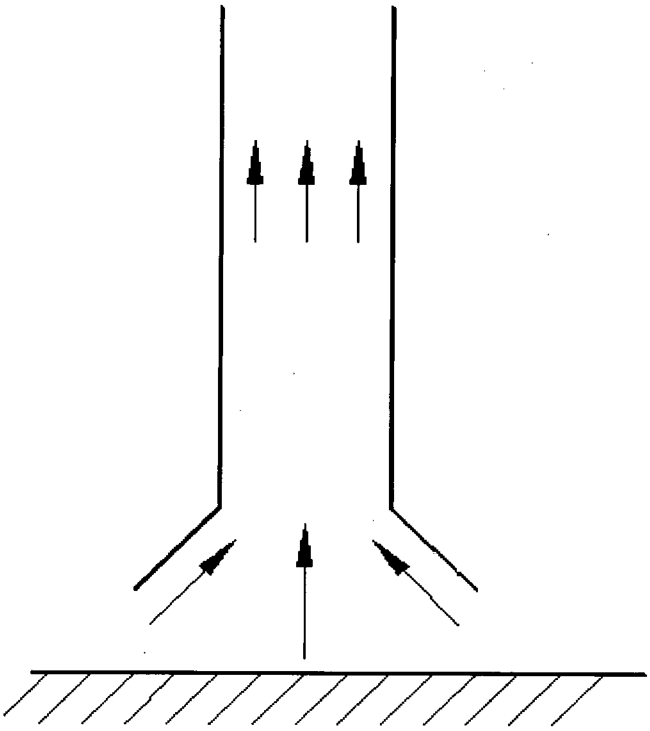

Fig. 1

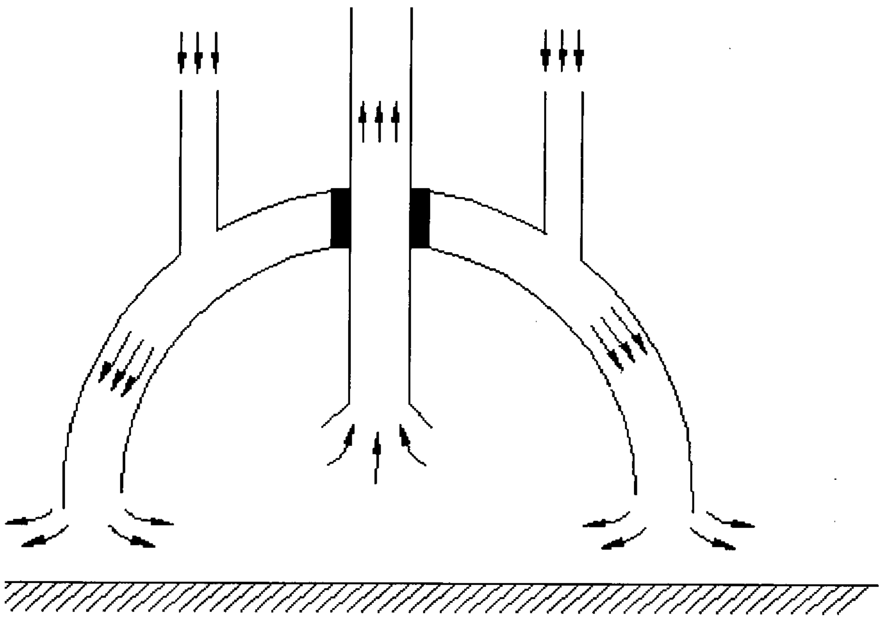

Fig. 2

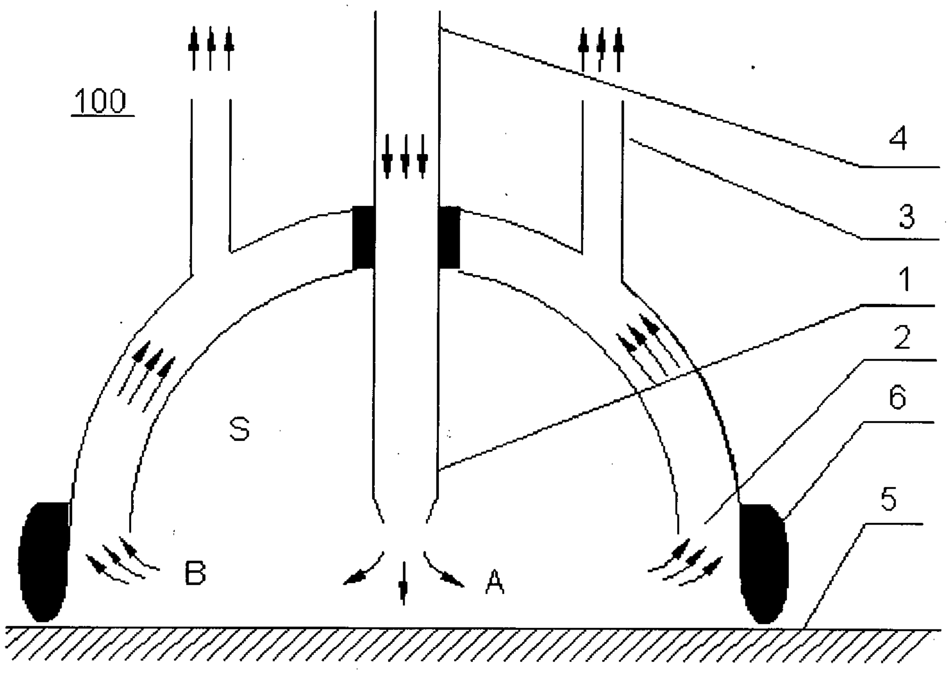


Fig. 3

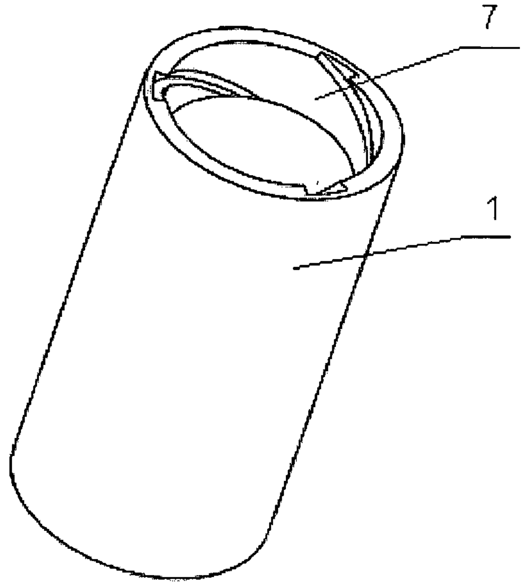


Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6378385 B
- US 2007034024 A
- US 2008250877 A
- US 2008314166 A
- US 2007032088 A
- US 5915268 A
- US 2004155181 A